# FASCICULE DE BREVET EUROPEEN

(11) **EP 3 414 360 B1**
(45) Date de publication et mention de la délivrance du brevet: **29.01.2020**
(21) Numéro de dépôt: 17708856.4
(22) Date de dépôt: 09.02.2017
(51) Int. Cl.: C23C 18/12, C09D 5/08

(54) **ÉLABORATION D'UN TRAITEMENT ANTI-CORROSION PAR VOIE SOL-GEL**
ENTWICKLUNG EINER SOL-GEL-KORROSIONSSCHUTZBEHANDLUNG
DEVELOPMENT OF A SOL-GEL ANTICORROSION TREATMENT

(30) Priorité: 09.02.2016 FR 1650995
(43) Date de publication de la demande: 19.12.2018
(73) Titulaire: Safran, 75015 Paris (FR); RBnano, 67200 Strasbourg (FR); Safran Landing Systems, 78140 Vélizy-Villacoublay (FR)
(72) Inventeur: CAMBON, Jean-Baptiste, 77550 Moissy-Cramayel Cedex (FR); ESTEBAN, Julien, 67000 Strasbourg (FR); MAFOUANA, Roland, Rodrigue, 67200 Strasbourg (FR); RUETSCH, Jean-Philippe, 68130 Walheim (FR)
(74) Mandataire: Regimbeau
(86) Numéro de dépôt international: PCT/FR2017/050301
(87) Numéro de publication internationale: WO 2017/137704

(56) Documents cités:
- WO-A2-2006/069376
- WO-A2-2009/069111
- US-A1- 2014 335 275
- YUGANG SUN ET AL: "CRYSTALLINE SILVER NANOWIRES BY SOFT SOLUTION PROCESSING", NANO LETTERS, AMERICAN CHEMICAL SOCIETY, US, vol. 2, no. 2, 3 janvier 2002 (2002-01-03) , pages 165-168, XP008072569, ISSN: 1530-6984, DOI: 10.1021/NL010093Y

## Description

### DOMAINE DE L'INVENTION

L'invention concerne l'élaboration d'un traitement anticorrosion pour des métaux, tels que l'aluminium, l'acier ou encore le magnésium ainsi que leurs alliages métalliques.

### ARRIERE-PLAN TECHNOLOGIQUE

Les métaux et leurs alliages sont beaucoup utilisés dans l'industrie, le choix du type de métal (ou d'alliage) utilisé étant réalisé par les industriels en fonction des propriétés (mécaniques, thermiques, conductrices chimiques, etc.) recherchées.

L'aluminium par exemple est souvent utilisé dans l'aéronautique car il présente à la fois une faible densité et de bonnes propriétés mécaniques et anticorrosion. Toutefois, afin d'améliorer encore la tenue mécanique de l'aluminium, ce métal est généralement allié avec d'autres éléments chimiques (tels que le cuivre Cu, le fer Fe, le zinc Zn, le silicium Si, etc.) qui forment des précipités durcissants et ont pour effet de diminuer considérablement les propriétés anticorrosion de l'aluminium.

Pour pallier ce problème, il est connu notamment dans l'industrie aéronautique d'appliquer des traitements de surfaces protecteurs sur la surface des pièces en alliage d'aluminium. On pourra notamment citer par exemple les procédés de conversion chimique, qui sont des procédés chimiques adaptés pour former une couche d'oxydes complexes (généralement à base de chromates et de zirconates) de très faible épaisseur (généralement inférieure au micron) sur la surface d'une pièce en alliage d'aluminium. Ainsi, le procédé de conversion chimique à base de chrome hexavalent Alodine 1200 permet par exemple d'obtenir un revêtement capable de protéger l'alliage d'aluminium contre la corrosion, présentant une bonne tenue dans le temps, de bonnes propriétés conductrices (essentielles pour assurer une continuité électrique dans un avion en cas de décharge importante) et une bonne adhérence vis-à-vis des peintures (traitement de finition).

Les procédés de conversion chimique sont généralement mis en œuvre par immersion de la pièce à traiter (pièce entièrement traitée) ou par retouche de la pièce à traiter (traitement local).

Dans le domaine de l'aéronautique, les performances attendues pour la pièce en alliage d'aluminium sont les suivantes :
- bonne tenue à la corrosion (c'est-à-dire au plus 2,5 piqûres par décimètre carré après une exposition à un brouillard salin conforme aux normes ASTM B 117 ou ISO 9227 pendant 168h dans le cas d'un procédé par immersion, et pendant 72h dans le cas d'un procédé par retouche) ;
- bonne conductivité électrique (c'est-à-dire une conductivité égale ou supérieure aux exigences requises par la norme MIL-DTL-81706) ;
- adhérence d'une peinture sur le revêtement obtenu (classe 0/1 à sec, classe 1/2 au plus après immersion dans des fluides) ;
- résistance aux fluides (eau, fluides hydrauliques, carburant, déverglaçant, solvants, etc.);
- revêtement obtenu coloré ou du moins visible à l'œil nu (couleur non imposée).

Les procédés de conversion chimique à base de chrome hexavalent, tels que l'Alodine 1200 permettent de former un revêtement sur une pièce en alliage d'aluminium présentant une très bonne tenue à la corrosion et sur lequel l'adhésion de la peinture est performante. Le revêtement ainsi obtenu est en outre capable de cicatriser (retouche locale), présente une action bactéricide ainsi qu'une couleur jaune/dorée facilement détectable par des opérateurs.

Ces procédés de conversion chimique présentent donc bien les performances attendues pour les pièces en alliage d'aluminium dans le domaine de l'aéronautique.

Toutefois, le traitement des effluents au chrome hexavalent est très coûteux et présente une forte toxicité. Par ailleurs, ce traitement ne répond pas aux exigences des normes environnementales (telles que le règlement n°1907/2006) et ne pourra vraisemblablement plus être utilisés à partir de 2017.

Il a donc été proposé de mettre en œuvre des procédés alternatifs de décapage, d'anodisation, de colmatage ou de conversion chimique afin d'obtenir par d'autres voies un revêtement sur une pièce métallique susceptible de présenter les performances attendues, notamment dans le domaine de l'aéronautique.

Toutefois, il s'avère qu'aucun des procédés alternatifs envisagés n'est universel, c'est-à-dire susceptible d'être appliqué sur un grand nombre d'alliages métalliques (en plus des alliages d'aluminium).

Il s'avère en outre que, parmi les procédés alternatifs qui ont été envisagés, seuls les procédés de conversion chimique SurTec® 650V et Lanthane 613.3, à base de chrome trivalent, permettent d'obtenir un revêtement coloré, les autres revêtements obtenus étant quasi incolores (voire légèrement irisé bleu). Or la présence d'une telle coloration est préférable pour permettre aux opérateurs de vérifier l'obtention du revêtement sur l'ensemble de la pièce métallique traitée. Par ailleurs, les procédés de conversion chimique SurTec® 650V et Lanthane 613.3 donnent des résultats satisfaisants pour les alliages d'aluminium des séries 5000 et 6000. Toutefois, ces procédés ne sont pas universels et ne peuvent donc pas être appliqués de manière satisfaisante à toutes les séries d'alliage d'aluminium, ni à d'autres alliages métalliques tels que des alliages à base de magnésium ou de fer.

Enfin, aucun revêtement obtenu par un procédé de conversion chimique n'est à ce jour suffisamment robuste pour tenir le critère de tenue en brouillard salin décrit ci-dessus dans le cas des alliages d'aluminium à hautes caractéristiques des séries 2000 et 7000.

WO 2009/069111 A2 divulgue un procédé de traitement des métaux, tels que l'aluminium, qui permet d'obtenir un revêtement par voie sol-gel et apporte une performance anticorrosion aux alliages métalliques.

### RESUME DE L'INVENTION

Un objectif de l'invention est donc de proposer un procédé de traitement d'une pièce réalisée dans un alliage métallique qui puisse être appliqué à un grand nombre d'alliages, et en particulier à toutes les séries d'alliages d'aluminium, aux alliages de fer et aux alliages de magnésium, qui présente bonne tenue à la corrosion, une bonne conductivité électrique, une bonne adhérence pour la peinture, une bonne résistance aux fluides et qui soit en outre facilement visible à l'œil nu par un opérateur.

De préférence, le procédé doit pouvoir être appliqué sur des pièces issues de barres, tôles ou des pièces forgées (des séries 1000 à 8000), des pièces issues de fonderie (en alliage AS7G0, 6, etc.) ainsi que sur des pièces obtenues par fabrication directe en alliage d'aluminium.

Pour cela, l'invention propose un procédé de traitement d'une pièce en alliage métallique, caractérisé en ce qu'il comprend les étapes suivantes :
- réalisation d'une formulation mère en mélangeant en parts molaires de silicium égales une solution alcoolique d'epoxysilane hydrolysé et une solution alcoolique d'aminosilane hydrolysé,
- mélange de la formulation mère avec une suspension comprenant des nano-fils conducteurs suivant une quantité massique comprise entre 0.1% et 10% par rapport à la masse totale de la formulation mère afin d'obtenir une formulation fille, et
- dépôt sur la pièce de la formulation fille afin d'obtenir le revêtement.

Ce procédé permet ainsi d'obtenir un revêtement par voie sol-gel qui apporte une performance anticorrosion aux alliages métalliques (notamment à base d'aluminium, d'acier ou encore de magnésium), dans lequel sont incorporés des nanofils conducteurs (à base d'argent) qui confèrent une conductivité électrique au revêtement. Ce revêtement répond en outre au cahier des charges des traitements de conversion chimique actuels à base de chrome hexavalent. Les applications sont notamment le traitement global des pièces ou la retouche locale de surface anodisée en cas de choc ou de décapage local.

Certaines caractéristiques préférées mais non limitatives du procédé décrit ci-dessus sont les suivantes, prises individuellement ou en combinaison :
- les nanofils conducteurs comprennent des nanofils d'argent, des nanofils de carbone et/ou des nanofils de cuivre,
- les nanofils conducteurs comprennent des nanofils d'argent, la suspension de nano-fils d'argent étant réalisée par centrifugation d'une suspension de nanofils et de particules d'argent à une vitesse comprise entre 2000 et 6000 tours par minute,
- la suspension de nanofils d'argent est obtenue conformément aux sous-étapes suivantes : dissoudre de la poly vinyl pyrrolidone dans de l'éthylène glycol afin d'obtenir une solution, chauffer la solution ainsi obtenue à une température comprise entre 100°C et 160°C, et après stabilisation de la température, ajouter une solution de chlorure de sodium et d'acetyl acétonate de fer (II), puis ajouter une solution de nitrate d'argent dans de l'éthylène glycol,
- la solution alcoolique d'aminosilane comprend de l'isopropanol,
- une concentration de la solution alcoolique d'epoxysilane hydrolysé et une concentration de la solution alcoolique d'aminosilane hydrolysé est d'environ 0.1 mol/L,
- la formulation mère comprend en outre du fluorosilane, suivant une concentration molaire comprise entre 0.5 et 5% par rapport au silicium issu de l'epoxysilane et de l'aminosilane et/ou de la silice nanométrique, suivant une concentration molaire comprise entre 1% et 5% par rapport au silicium issu de l'epoxysilane et de l'aminosilane,
- la formulation mère comprend en outre un colorant suivant une concentration massique comprise entre 0.5 et 5% par rapport à la masse sèche de la formulation mère,
- le procédé comprend en outre, préalablement au dépôt du revêtement, une étape de décapage de la pièce et/ou une étape de prétraitement de la pièce à l'aide d'un promoteur d'adhésion,
- le procédé comprend en outre, après l'étape de dépôt du revêtement une étape de polymérisation de la pièce à une température comprise entre 80°C et 150°C, de préférence entre 80°C et 120°C,
- dans la formulation mère, les nanofils conducteurs présentent un rapport d'aspect compris entre 1 et 100, et/ou
- le dépôt est réalisé par pulvérisation de la formulation fille sur la pièce, par revêtement au trempé de la pièce dans la formulation fille ou par robotisation.

Selon un deuxième aspect, l'invention propose également une pièce en alliage métallique comprenant un revêtement obtenu suivant un procédé de traitement comme décrit ci-dessus et présentant une épaisseur du revêtement comprise entre 0.5 et 5 micromètres.

Certaines caractéristiques préférées mais non limitatives de la pièce décrite ci-dessus sont les suivantes, prises individuellement ou en combinaison :
- un matériau constitutif de la pièce comprend un alliage d'aluminium, un alliage de fer ou un alliage de magnésium, et/ou
- le revêtement comprend des nanofils d'argent.

### BREVE DESCRIPTION DES DESSINS

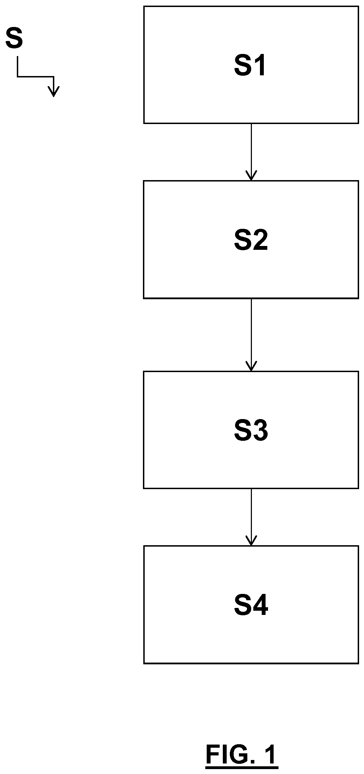

D'autres caractéristiques, buts et avantages de la présente invention apparaîtront mieux à la lecture de la description détaillée qui va suivre, et au regard de la figure unique annexé donné à titre d'exemples non limitatifs, qui est un organigramme illustrant les étapes d'un procédé de traitement d'une pièce conforme à l'invention.

### DESCRIPTION DETAILLEE D'UN MODE DE REALISATION

L'invention propose un procédé de traitement S d'une pièce en alliage métallique afin de la revêtir d'un revêtement présentant une bonne tenue à la corrosion, une bonne conductivité électrique, une bonne adhérence pour la peinture et une bonne résistance aux fluides. Le cas échéant, le revêtement doit également pouvoir être coloré afin d'être visible par un opérateur.

Par exemple, dans le cas d'une pièce en alliage d'aluminium, le revêtement doit conférer les propriétés suivantes à la pièce :
- au plus 2,5 piqûres par décimètre carré après une exposition à un brouillard salin conforme aux normes ASTM B 117 ou ISO 9227 pendant 168h dans le cas d'un procédé par immersion, et pendant 72h dans le cas d'un procédé par retouche ;
- une conductivité thermique égale ou supérieure aux exigences requises par la norme MIL-DTL-81706 ;
- une adhérence d'une peinture sur le revêtement obtenu de classe 0/1 à sec, et classe 1/2 au plus après immersion dans des fluides ; et
- une résistance aux fluides (eau, fluides hydrauliques, carburant, déverglaçant, solvants, etc.).

A cet effet, le procédé de traitement S d'une pièce en alliage métallique comprend les étapes suivantes :
- réalisation (étape S1) d'une formulation mère en mélangeant en parts molaires de silicium égales une solution alcoolique d'epoxysilane hydrolysé et une solution alcoolique d'aminosilane hydrolysé,
- mélange (étape S2) de la formulation mère avec une suspension comprenant des nano-fils conducteurs suivant une quantité massique comprise entre 0.1% et 10% par rapport à la masse sèche de la formulation mère afin d'obtenir une formulation fille, et
- dépôt (étape S3) sur la pièce de la formulation fille afin d'obtenir le revêtement.

Plus précisément, au cours de la première étape S1, une formulation mère est obtenue en mélangeant en parts molaires de silicium égales une solution alcoolique d'epoxysilane hydroliysé et une solution alcoolique d'aminosilane hydrolysé.

Dans une forme de réalisation, la solution alcoolique d'aminosilane hydrolysé peut comprendre de l'isopropanol.

Dans un exemple de réalisation, deux solutions dont on mesure les quantités d'intrants peuvent être préparées afin d'obtenir la formulation mère. Pour cela, une première solution à 0.1 mole d'epoxysilane dans l'isopropanol (IP) peut être préparée par pesée de 24.622g de 2-(3,4-Epoxycyclohexyl)ethyltrimethoxysilane (masse molaire de 246.22 g.mol⁻¹). On ajoute ensuite 769.778g d'iso-propanol IP puis 0.3 moles d'eau (soit 5.4g) pour hydrolyser les trois fonctions alcoxy de l'epoxysilane. La première solution est ensuite mise en étuve dans un flacon fermé à 50°C pendant 12h. On procède ensuite de la même manière avec l'aminosilane, par exemple par pesée de 3-N,N-Dimethylaminopropyl)trimethoxysilane. On obtient ainsi deux solutions qui contiennent à volume égal la même quantité de silicium.

Le degré d'hydrolyse de la solution alcoolique d'epoxysilane et de la solution alcoolique d'aminosilane peut être ajusté en fonction des propriétés anticorrosion recherchées pour la pièce en alliage métallique et/ou de la quantité de nanofils conducteurs. Par exemple, dans le cas où la surface sur laquelle est déposé le revêtement est hydrophobe, comme une surface en aluminium décapée, des solutions n'ayant subi qu'une ou deux hydrolyses peuvent être préférées.

L'épaisseur du revêtement obtenu à l'aide du procédé de traitement S dépend de la viscosité de la formulation mère. La viscosité de la formulation mère peut par exemple être ajustée en faisant varier la dilution du solvant de la solution alcoolique d'aminosilane.

Les concentrations de chacune de deux parties de la formulation mère peuvent par exemple être d'environ 0.1 mole/L. Les deux solutions sont ensuite mélangées à parts molaires de silicium égales pour donner la formulation mère.

De manière optionnelle, il est possible d'ajouter un fluoro-silane dans la formulation mère suivant une concentration molaire comprise entre 0.5% et 5% (par rapport à la concentration molaire du silicium issu de l'epoxysilane et de l'aminosilane), afin d'accroitre l'hydrophobicité du revêtement obtenu à l'aide du procédé S.

Egalement de manière optionnelle, de la silice nanométrique peut être ajoutée à la formulation mère suivant une concentration molaire comprise entre 1% et 5% (par rapport au silicium issu de l'epoxy-silane et de l'aminosilane) afin d'améliorer la dureté du revêtement. Par silice nanométrique, on comprendra ici une silice dont un diamètre moyen des grains est compris entre 7 et 40 nanomètres. Une telle silice est vendue par exemple sous la dénomination commerciale AEROSIL®.

Afin d'obtenir un revêtement visible à l'œil nu par un opérateur, un colorant synthétique, tel qu'un colorant synthétique à solvant vendu sous la dénomination commerciale ORASOL®, peut être ajouté dans la formulation, suivant une concentration massique comprise entre 0.5% et 5% (par rapport à la masse sèche totale de la formulation mère).

Au cours de la deuxième étape S2, on introduit dans la formulation mère ainsi obtenue une suspension comprenant des nano-fils conducteurs suivant une quantité massique comprise entre 0.1% et 10% (par rapport à la masse sèche totale de la formulation mère) afin d'obtenir une formulation fille.

La quantité massique des nano-fils conducteurs dans la suspension peut être ajustée en fonction de la conductivité électrique souhaitée pour le revêtement que l'on cherche à obtenir sur la pièce en alliage métallique.

Par ailleurs, la suspension est de préférence à base d'alcool.

Les nanofils conducteurs peuvent comprendre des nanofils d'argent, des nanofils de carbone, des nanofils de cuivre ou un mélange de ces nanofils.

De préférence, les nanofils conducteurs présentent un rapport d'aspect compris entre 1 et 100 afin de permettre la formation d'une suspension stable dans la formulation fille avant l'étape S3 de dépôt.

Les nanofils conducteurs peuvent être synthétisés de manière conventionnelle.

On pourra notamment se référer aux publications suivantes pour des exemples de synthétisation de nanofils d'argent : Highly Flexible Transparent Film Heaters Based on Random Networks of Silver Nanowires, Caroline Celle, Céline Mayousse, Eléonore Moreau, Henda Basti, Alexandre Carella, and Jean-Pierre Simonato, Nano Res. 2012, 5(6): 427-433 ; Fabrication of Silver Nanowire Transparent Electrodes at Room Temperature, Takehiro Tokuno, Masaya Nogi (), Makoto Karakawa, Jinting Jiu, Thi Thi Nge, Yoshio Aso, and Katsuaki Suganuma, Nano Res. 2011, 4(12): 1215- 1222; Scalable Coating and Properties of Transparent, Flexible, Silver Nanowire Electrodes, Liangbing Hu, Han Sun Kim, Jung-Yong Lee, Peter Peumans, and Yi Cui, ACSnano VOL. 4▪ NO. 5 ▪ 2955-2963 ▪ 2010 ; Silver nanowire-based transparent, flexible, and conductive thin film, Cai-Hong Liu, Xun Yu, Nanoscale Research Letters 2011,6:75; Ag-nanowire films coated with ZnO nanoparticles as a transparent electrode for solar cells, Frederik S. F. Morgenstern, Dinesh Kabra, Sylvain Massip, Thomas J. K. Brenner, Philip E. Lyons et al., Appl. Phys. Lett. 99, 183307 (2011); doi: 10.1063/1.3656973.

Le cas échéant, ces procédés de synthétisation des nanofils d'argent peuvent être adaptés afin d'obtenir un revêtement transparent (seul le colorant éventuellement ajouté conférant un aspect coloré au revêtement).

Un exemple de procédé de synthétisation de nanofils d'argent peut être réalisé comme suit :
(i) dissoudre environ 0.2g de poly vinyl pyrrolidone (PVP) dans 20 g à 30 g d'ethylène glycol puis 200 à 600 mg de nitrate d'argent en solution dans l'éthylène glycol. De préférence, le nitrate d'argent n'est ajouté qu'après chauffage de la solution à la température de synthèse et stabilisation de ladite température. De manière optionnelle, il est possible d'ajouter de l'acetyl acétonate de fer pour obtenir des nanofils d'argent présentant une plus grande longueur (10µm), et donc un rapport d'aspect plus important.
(ii) faire chauffer la solution ainsi obtenue à une température comprise entre 100°C et 160°C pendant une durée comprise entre 10 minutes et 60 minutes. On obtient alors une suspension de nanofils d'argent.
(iii) laisser refroidir la suspension.
(iv) centrifuger la suspension à une vitesse comprise entre 2000 tr/min (209.4 rad/s) et 6000 tr/min (628.3 rad/s). Les nanofils d'argent, qui sont alors les éléments les plus massifs, forment le culot de centrifugation au fond du dispositif de centrifugation, tandis que les nanoparticules restent en suspension. Il suffit alors d'éliminer le surnageant et de laver culot à plusieurs reprises avec un alcool pour prélever les nanofils d'argent.

On notera que l'exemple de procédé de synthétisation décrit ici est facilement adaptable à une plus grande échelle.

Au cours de la troisième étape S3, la formulation fille ainsi obtenue est déposée sur la pièce en alliage métallique afin de former un revêtement. Le dépôt peut être effectué par projection thermique (technique plus connue sous sa dénomination anglosaxonne de « spray coating » ou « thermal spray coating ») de la formulation fille, par revêtement au trempé (technique plus connue sous sa dénomination anglosaxonne de « dip coating ») de la pièce dans la formulation fille, ou par pulvérisation à l'aide d'un robot.

Le choix de la technique de dépôt dépend notamment de la forme de la pièce en alliage métallique à revêtir et du nombre de pièces à produire. Par exemple, pour des pièces de forme simple, le dip coating et le spray coating peuvent être envisagés. En revanche, pour des pièces présentant une géométrie complexe (présence d'orifices traversants, d'angles vifs, etc.), la pulvérisation à l'aide d'un robot peut être préférée afin de permettre un bon écoulement de la formulation fille par rotation et/ou translation de la pièce par rapport au robot d'application.

Optionnellement, la surface à revêtir de la pièce d'aluminium peut être décapée et/ou prétraitée à l'aide d'un agent promoteur d'adhésion tel que du carboxylate de fer ou de l'aminosilane en forte dilution, avant l'étape S3 de dépôt.

Au cours d'une quatrième étape S4, le revêtement ainsi formé sur la pièce en alliage métallique est ensuite polymérisé à une température comprise entre 80°C et 150°C. De préférence, lorsque l'alliage métallique est à base d'aluminium, la température de polymérisation reste inférieure à 120°C afin de ne pas altérer les propriétés mécaniques de l'alliage d'aluminium, en particulier lorsque la pièce traitée est écrouie ou galetée. Une conduction entre l'alliage métallique constituant la pièce métallique et le revêtement est obtenue par percolation entre les nanofils conducteurs et la surface de la pièce métallique.

Le procédé de traitement S permet ainsi de revêtir une pièce en alliage métallique avec un revêtement présentant de bonnes propriétés mécaniques, anticorrosion et conductrices, une bonne adhérence pour la peinture et une bonne résistance aux fluides. La surface de la pièce revêtue avec ce revêtement peut varier de 1.7 m² à 5 m² par litre de formulation fille comprenant les nanofils conducteurs, selon la dilution choisie pour ladite formulation fille. Lorsque la formulation mère comprend un colorant, le revêtement formé sur la pièce est en outre visible à l'œil nu.

On notera que la gélification est produite par la formation de liaisons métal-oxygene- métal dans le liquide dit sol qui se transforme en un pseudo solide dit gel. Dans notre cas plus spécifique ce sont les liaisons Si-O-Si qui se produisent mais sous l'effet de l'évaporation du solvant et de la température qui apporte l'énergie pour la formation de ces liaisons.

Enfin, l'ajustement de la dilution de la formulation mère (et en particulier de la solution alcoolique d'aminosilane) permet de former un revêtement présentant une épaisseur comprise entre 0.5 et 5 micromètres.

### Exemple

Un revêtement d'une pièce en alliage d'aluminium pouvant être utilisée dans le domaine de l'aéronautique peut par exemple être obtenu comme suit. Ici, l'alliage d'aluminium est un alliage de la série 2000 de référence 2024-T351-215.

Au cours de la première étape S1, la formulation mère est obtenue en mélangeant 4.5 g d'une solution alcoolique d'epoxysilane hydroliysé (degré d'hydrolyse de compris entre 1.5 et 3) avec 3.59 g d'une solution alcoolique d'aminosilane hydrolysé (degré d'hydrolyse compris entre 1.5 et 3), présentant chacune une concentration de 0.1 mole/L. A cette formulation sont ajoutés :
- entre 0.1 et 0.6 g de fluoro-silane,
- 1,44 g de silice nanométrique avec de l'aminosilane (10% en poids de SiO2) (par exemple de la silice nanométrique AEROSIL® 200) et
- 0.100 g de colorant ORASOL® (par exemple de l'ORASOL® BL bleu)
- 3,98 g d'isopropanol pour ajuster la viscosité de la formulation.

Au cours de la deuxième étape S2, on introduit dans la formulation mère ainsi obtenue une suspension comprenant 30 mg à 150 mg de nano-fils d'argent présentant un rapport d'aspect compris entre 5 et 60, par exemple de l'ordre d'une trentaine en moyenne. Les nanofils d'argent ont ici été obtenus en dissolvant successivement environ 0.2 grammes de poly vinyl pyrrolidone (PVP) ayant une masse molaire de 55 000 g.mol⁻¹ (ce paramètre influençant la longueur et le diamètre des nanofils) dans 23 g d'ethylène glycol puis on chauffe à 130°C. Après stabilisation de la température, on ajoute 124 µL de solution de chlorure de sodium (NaCl) (à 100 mM) et 833 µL d'acetyl acétonate de fer (II) (à 2,2 mM). Le chlorure de sodium et l'acétyl acétonate de fer sont ici en solution dans l'éthylène glycol. Après dix minutes, on ajoute la solution de nitrate d'argent (AgNO3) (comprenant 0,83 g d'AgNO3 dissout dans 4,2 mL d'éthylène glycol) puis on laisse réagir pendant 60 à 180 minutes. Après refroidissement, la suspension est centrifugée à une vitesse comprise entre 2000 rad/s et 6000 rad/s afin de prélever les nanofils d'argent.

Au cours de la troisième étape S3, la surface à revêtir de la pièce d'aluminium est décapée puis la formulation fille ainsi obtenue est déposée sur la pièce en alliage métallique par spray coating afin de former un revêtement.

Au cours de la quatrième étape S4, le revêtement ainsi formé sur la pièce en alliage métallique est polymérisé à une température de 120°C pendant une heure.

On obtient alors un revêtement présentant les propriétés suivantes :
- Adhérence par traction supérieure à 7 Mpa,
- Adhérence par quadrillage : 0 en norme ISO,
- Pencil test > 6H,
- Scléromètre : 8 N
- Rugosité Ra : 0,4 à 0,7 µm

Le volume de formulation fille comprenant des nanofils d'argent nécessaire pour couvrir une surface d'un mètre carré est compris entre 1 L et 5 L, pour une épaisseur de revêtement de l'ordre de 1 à 5 micromètres.

## Revendications

1. Procédé de traitement (S) d'une pièce en alliage métallique, **caractérisé en ce qu'**il comprend les étapes suivantes :
- réalisation d'une formulation mère (S1) en mélangeant en parts molaires de silicium égales une solution alcoolique d'epoxysilane hydrolysé et une solution alcoolique d'aminosilane hydrolysé,
- mélange (S2) de la formulation mère avec une suspension comprenant des nano-fils conducteurs suivant une quantité massique comprise entre 0.1% et 10% par rapport à la masse totale de la formulation mère afin d'obtenir une formulation fille, et
- dépôt (S3) sur la pièce de la formulation fille afin d'obtenir le revêtement.

2. Procédé (S) selon la revendication 1, dans lequel les nanofils conducteurs comprennent des nanofils d'argent, des nanofils de carbone et/ou des nanofils de cuivre.

3. Procédé (S) selon l'une des revendications 1 ou 2, dans lequel les nanofils conducteurs comprennent des nanofils d'argent, la suspension de nano-fils d'argent étant réalisée par centrifugation d'une suspension de nanofils et de particules d'argent à une vitesse comprise entre 2000 et 6000 tours par minute.

4. Procédé (S) selon la revendication 3, dans lequel la suspension de nanofils d'argent est obtenue conformément aux sous-étapes suivantes :
- dissoudre de la poly vinyl pyrrolidone dans de l'éthylène glycol afin d'obtenir une solution,
- chauffer la solution ainsi obtenue à une température comprise entre 100°C et 160°C, et
- après stabilisation de la température, ajouter une solution de chlorure de sodium et d'acetyl acétonate de fer (II), puis ajouter une solution de nitrate d'argent dans de l'éthylène glycol.

5. Procédé (S) selon l'une des revendications 1 à 4, dans lequel la solution alcoolique d'aminosilane comprend de l'isopropanol.

6. Procédé (S) selon l'une des revendications 1 à 5, dans lequel une concentration de la solution alcoolique d'epoxysilane hydrolysé et une concentration de la solution alcoolique d'aminosilane hydrolysé est d'environ 0.1 mol/L.

7. Procédé (S) selon l'une des revendications 1 à 6, dans lequel la formulation mère comprend en outre du fluorosilane, suivant une concentration molaire comprise entre 0.5 et 5% par rapport au silicium issu de l'epoxysilane et de l'aminosilane et/ou de la silice nanométrique, suivant une concentration molaire comprise entre 1% et 5% par rapport au silicium issu de l'epoxysilane et de l'aminosilane.

8. Procédé (S) selon l'une des revendications 1 à 7, dans lequel la formulation mère comprend en outre un colorant suivant une concentration massique comprise entre 0.5 et 5% par rapport à la masse sèche de la formulation mère.

9. Procédé (S) selon l'une des revendications 1 à 8, comprenant en outre, préalablement au dépôt du revêtement, une étape de décapage de la pièce et/ou une étape de prétraitement de la pièce à l'aide d'un promoteur d'adhésion.

10. Procédé (S) selon l'une des revendications 1 à 9, comprenant en outre après l'étape de dépôt (S3) du revêtement une étape (S4) de polymérisation de la pièce à une température comprise entre 80°C et 150°C, de préférence entre 80°C et 120°C.

11. Procédé (S) selon l'une des revendications 1 à 10, dans lequel, dans la formulation mère, les nanofils conducteurs présentent un rapport d'aspect compris entre 1 et 100.

12. Procédé (S) selon l'une des revendications 1 à 11, dans lequel le dépôt est réalisé par pulvérisation de la formulation fille sur la pièce, par revêtement au trempé de la pièce dans la formulation fille ou par robotisation.

13. Pièce en alliage métallique, **caractérisée en ce qu'**elle comprend un revêtement obtenu suivant un procédé de traitement (S) selon l'une des revendications 1 à 12 présentant une épaisseur du revêtement comprise entre 0.5 et 5 micromètres.

14. Pièce selon la revendication 13, dans laquelle un matériau constitutif de la pièce comprend un alliage d'aluminium, un alliage de fer ou un alliage de magnésium.

15. Pièce selon l'une des revendications 13 ou 14, dans laquelle le revêtement comprend des nanofils d'argent.

## Patentansprüche

1. Behandlungsverfahren (S) eines Werkstücks aus einer Metalllegierung, **dadurch gekennzeichnet, dass** es die folgenden Schritte umfasst:
- Herstellung einer Stammformulierung (S1) durch Mischen, in gleichen molaren Silicium-Anteilen, einer alkoholischen Lösung von hydrolysiertem Epoxysilan und einer alkoholischen Lösung von hydrolysiertem Aminosilan,
- Mischen (S2) der Stammformulierung mit einer Suspension, umfassend leitfähige Nanodrähte in einer Massenmenge im Bereich zwischen 0,1 % und 10 % bezogen auf die Gesamtmasse der Stammformulierung, um einer Tochterformulierung zu erhalten, und
- Abscheidung (S3) der Tochterformulierung auf dem Werkstück, um die Beschichtung zu erhalten.

2. Verfahren (S) nach Anspruch 1, wobei die leitfähigen Nanodrähte Nanodrähte aus Silber, Nanodrähte aus Kohlenstoff und/oder Nanodrähte aus Kupfer umfassen.

3. Verfahren (S) nach einem der Ansprüche 1 oder 2, wobei die leitfähigen Nanodrähte Nanodrähte aus Silber umfassen, die Suspension von Nanodrähten aus Silber durch Zentrifugation einer Suspension von Nanodrähten und Partikeln aus Silber bei einer Geschwindigkeit im Bereich zwischen 2000 und 6000 Umdrehungen pro Minute hergestellt wird.

4. Verfahren (S) nach Anspruch 3, wobei die Suspension von Nanodrähten aus Silber in Übereinstimmung mit folgenden Unterschritten erhalten wird:
- Auflösen von Polyvinylpyrrolidon in Ethylenglycol, um eine Lösung zu erhalten,
- Erwärmen der so erhaltenen Lösung auf eine Temperatur im Bereich zwischen 100 °C und 160 °C, und
- nach Stabilisierung der Temperatur, Hinzufügen einer Lösung von Natriumchlorid und Eisen(II)acetylacetonat, anschließend Hinzufügen einer Lösung von Silbernitrat in Ethylenglycol.

5. Verfahren (S) nach einem der Ansprüche 1 bis 4, wobei die alkoholische Aminosilanlösung Isopropanol umfasst.

6. Verfahren (S) nach einem der Ansprüche 1 bis 5, wobei eine Konzentration der alkoholischen Lösung von hydrolysiertem Epoxysilan und eine Konzentration der alkoholischen Lösung von hydrolysiertem Aminosilan ungefähr 0,1 mol/L beträgt.

7. Verfahren (S) nach einem der Ansprüche 1 bis 6, wobei die Stammformulierung weiter Fluorsilan gemäß einer molaren Konzentration im Bereich zwischen 0,5 und 5 %, bezogen auf das aus dem Epoxysilan und dem Aminosilan stammende Silicium und/oder nanoskaliges Siliciumdioxid gemäß einer molaren Konzentration im Bereich zwischen 1 % und 5 %, bezogen auf das aus dem Epoxysilan und dem Aminosilan stammende Silicium, umfasst.

8. Verfahren (S) nach einem der Ansprüche 1 bis 7, wobei die Stammformulierung weiter einen Farbstoff gemäß einer Massenkonzentration im Bereich zwischen 0,5 und 5 %, bezogen auf die Trockenmasse der Stammformulierung, umfasst.

9. Verfahren (S) nach einem der Ansprüche 1 bis 8, weiter umfassend, vor dem Abscheiden der Beschichtung, einen Beizschritt des Werkstücks und/oder einen Vorbehandlungsschritt des Werkstücks mittels eines Haftvermittlers.

10. Verfahren (S) nach einem der Ansprüche 1 bis 9, weiter umfassend, nach dem Abscheidungsschritt (S3) der Beschichtung, einen Schritt (S4) der Polymerisierung des Werkstücks bei einer Temperatur im Bereich zwischen 80 °C und 150 °C, vorzugsweise zwischen 80 °C und 120 °C.

11. Verfahren (S) nach einem der Ansprüche 1 bis 10, wobei die leitfähigen Nanodrähte in der Stammformulierung ein Seitenverhältnis im Bereich zwischen 1 und 100 aufweisen.

12. Verfahren (S) nach einem der Ansprüche 1 bis 11, wobei die Abscheidung durch Aufsprühen der Tochterformulierung auf das Werkstück, durch Heißtauchbeschichtung des Werkstücks in der Tochterformulierung oder durch Robotisierung durchgeführt wird.

13. Werkstück aus einer Metalllegierung, **dadurch gekennzeichnet, dass** es eine gemäß einem Behandlungsverfahren (S) nach einem der Ansprüche 1 bis 12 erhaltene Beschichtung umfasst, die eine Beschichtungsdicke im Bereich zwischen 0,5 und 5 Mikrometer aufweist.

14. Werkstück nach Anspruch 13, wobei ein konstituierendes Material des Werkstücks eine Aluminiumlegierung, eine Eisenlegierung oder eine Magnesiumlegierung umfasst.

15. Werkstück nach einem der Ansprüche 13 oder 14, wobei die Beschichtung Nanodrähte aus Silber umfasst.

## Claims

1. Method for treating (S) a metal alloy part, **characterised in that** it comprises the following steps:
- producing a stock formulation (S1) by mixing, in equal molar parts of silicon, an alcoholic solution of hydrolysed epoxysilane and an alcoholic solution of hydrolysed aminosilane,
- mixing (S2) the stock formulation with a suspension comprising conductive nanowires in an amount by weight of between 0.1 % and 10% relative to the total weight of the stock formulation in order to obtain a dilute formulation, and
- depositing (S3) the dilute formulation on the part in order to obtain the coating.

2. Method (S) according to claim 1, wherein the conductive nanowires comprise silver nanowires, carbon nanowires and/or copper nanowires.

3. Method (S) according to one of claims 1 or 2, wherein the conductive nanowires comprise silver nanowires, with the suspension of silver nanowires being carried out via centrifugation of a suspension of nanowires and of silver particles at a speed between 2000 and 6000 rpm.

4. Method (S) according to claim 3, wherein the suspension of silver nanowires is obtained in accordance with the following substeps:
- dissolving poly vinyl pyrrolidone in ethylene glycol in order to obtain a solution,
- heating the solution thus obtained at a temperature between 100°C and 160°C, and
- after stabilisation of the temperature, adding a solution of sodium chloride and of iron (II) acetyl acetonate, then adding a solution of silver nitrate in the ethylene glycol.

5. Method (S) according to one of claims 1 to 4, wherein the alcoholic solution of aminosilane comprises isopropanol.

6. Method (S) according to one of claims 1 to 5, wherein a concentration of the alcoholic solution of hydrolysed epoxysilane and a concentration of the alcoholic solution of hydrolysed aminosilane is about 0.1 mol/L.

7. Method (S) according to one of claims 1 to 6, wherein the stock formulation further comprises fluorosilane, in a molar concentration between 0.5 and 5% relative to the silicon coming from the epoxysilane and from the aminosilane and/or from the nanometric silica, in a molar concentration between 1% and 5% relative to the silicon coming from the epoxysilane and from the aminosilane.

8. Method (S) according to one of claims 1 to 7, wherein the stock formulation further comprises a colouring agent in an amount by weight between 0.5 and 5% relative to the dry weight of the stock formulation.

9. Method (S) according to one of claims 1 to 8, further comprising, prior to the deposition of the coating, a step of stripping the part and/or a step of pre-treating the part using an adhesion promoter.

10. Method (S) according to one of claims 1 to 9, further comprising after the step of depositing (S3) the coating a step (S4) of polymerisation of the part at a temperature between 80°C and 150°C, preferably between 80°C and 120°C.

11. Method (S) according to one of claims 1 to 10, wherein, in the stock formulation, the conductive nanowires have an aspect ratio between 1 and 100.

12. Method (S) according to one of claims 1 to 11, wherein the deposition is carried out by spraying the dilute formulation on the part, by hot-dip coating of the part in the dilute formulation or via robotisation.

13. Metal alloy part, **characterised in that** it comprises a coating obtained according to a method of treatment (S) according to one of claims 1 to 12 having a thickness of the coating between 0.5 and 5 micrometres.

14. Part according to claim 13, wherein a constituent material of the part comprises an aluminium alloy, an iron alloy or a magnesium alloy.

15. Part according to one of claims 13 or 14, wherein the coating comprises silver nanowires.
